# FASCICULE DE BREVET EUROPEEN

(11) **EP 2 345 319 B1**
(45) Date de publication et mention de la délivrance du brevet: **31.12.2014**
(21) Numéro de dépôt: 10366006.4
(22) Date de dépôt: 29.11.2010
(51) Int. Cl.: A01C 1/06

(54) **Procédé d'apport d'oligoéléments vers les résidusphères ou zones du sol entourant les résidus de culture**
Verfahren zur Zuführung von Spurenelementen in Bodenbereiche um Ernterückstände
Method for vectorising trace elements to the residuespheres or areas of the soil surrounding crop residues

(30) Priorité: 18.01.2010 FR 1000165
(43) Date de publication de la demande: 20.07.2011
(73) Titulaire: Agronutrition, 31390 Carbonne (FR)
(72) Inventeur: Claude, Pierre-Philippe, 54000 Nancy (FR)
(74) Mandataire: Lassiaille, Christian Michel

(56) Documents cités:
- FR-A1- 2 910 230
- FR-A1- 2 941 592
- GB-A- 2 110 518
- US-A- 4 930 431

## Description

### DOMAINE TECHNIQUE DE L'INVENTION

Le domaine de l'invention est celui des matièresfertilisantes, et plus particulièrement celui des compléments d'oligoéléments et des biofertilisations (azoto)bactériennes destinés aux cultures agronomiques et fourragères.

### ÉTAT DE LA TECHNIQUE

### Le molybdène en production végétal

Le molybdène (Mo) joue un rôle en production végétale (Kaiser et al 2005) entant que cofacteur enzymatique de plusieurs métabolismes, y compris des nitrates et de l'azote diatomique. Le Mo joue aussi un rôle dans la rhizosphère via son interaction avec certaines bactéries favorisant la croissance des plantes (BFCP ; El-Samad et al. 2005).

Selon Loué (1993), d'une manière générale les céréales (blé, orge, avoine et seigle) sont peu sensibles aux déficiences en Zn, B, Mo et plus sensibles aux déficiences en Mn et Cu. Selon Loué 1993, la déficience Mo à très peu d'importance sur Poaceae (graminées) ; la déficience Mo n'a pas été détectée sur céréales en France. Cela dit, du fait de l'implication de la nitrate réductase - enzyme molybdénique impliqué dans l'assimilation de l'azote par la plante, certains auteurs (op cit Loué 1993) ont pu détecter des effets de la fertilisation Mo sur les rendements céréaliers, mais cela seulement dans les cas de sols très pauvres en Mo-extractible; sur céréales, les déficiences Mo ne devraient ce manifester que sur sols à moins de 10 ng (*nano*gramme)-Mo par g de sol. Les besoins en Mo du maïs sont eux très faibles ; si carences il y a, c'est surtout au niveau des semences qu'il pourrait ce manifester si leurs teneurs en Mo sont de moins de 0, 02 ppm, seuil critique somme tout relativement faible. Enfin, et pour ce qui concerne les herbages, les teneurs oligoélémentaires cibles (de référence) sont surtout tributaires des besoins de la ration animale. Or, pour le Mo les seuils de déficience végétal et de carence animale sont tous les deux d'environs 0,1 ppm (100 ppb), tandis que le seuil de toxicité animale est de 3 ppm (3000 ppb), seuil facilement franchissable - du moins par le raygras *(Lolium* spp.).

Il est donc raisonnable de dire qu'en production céréalière et en maïsiculture, voire plus généralement pour ce qui concerne la culture des herbages Poaceae, ce prémunir contre d'éventuelles carences en Mo par l'apport de Mo au sol, au feuillage et/ou aux semences est a priori peu ou pas défendable économiquement. Aux yeux de l'homme de métier, cet état de la technique justifia à ce jour l'impasse de Mo en guise de traitement de semence Poaceae, voire plus généralement de l'ensemble des semences non-Fabaceae.

### Le molybdène en microbiologie des sols

Le métabolisme azotobactérien est affecté par la disponibilité du molybdène (Mo), et dans une moindre mesure du fer (Fe), voire du vanadium (V), cofacteurs du complexe enzymatique nitrogenase responsable de la réduction de l'azote diatomique (Igarashi et Seefeldt 2003 ; Loveless et *al.* 1999). Cette activité enzymatique est source d'azote réduit assimilable par la plante et/ou de certaines phytohormones, notamment certaines acides indole acétiques (IAA), ou *auxines.* En effet, la plupart des 50 enzymes molybdèniques, soit environ 90%, sont exclusivement bactériennes (Mendel 2007). Parmi celles-ci, seule la nitrogenase comporte un facteur Mo qui n'est pas lié à une molécule ptérique (Mendel et Hänsch 2002).

En situations écologiques où le taux de la production de biomasse est modéré, la disponibilité du Mo dans les sols n'est généralement pas limitative. Or, en situations agronomiques, surtout si l'activité azotobactérienne est augmentée suite à l'incorporation au sol de résidus de culture pailleux et/ou racinaires, voire par la bactérisation azotobactérienne de ceux-ci, la disponibilité du Mo peut en principe être insuffisante pour permettre le plein rendement de la diazotrophie. Dans de telles situations, l'apport de Mo est envisageable, bien qu'il soit dans la pratique difficilement réalisable économiquement.

### Comment apporter le Mo à la résidusphère ?

Du fait d'un meilleur contact entre les bactéries du sol et les résidus de culture pailleux qu'il entraîne, il est généralement établit que l'incorporation de ceux-ci favorisera leur dégradation. Or, pour des raisons agronomiques, notamment la répression des mauvais herbes par « étouffement » de cette flore par des biomasses Cipan toujours en place au moment du semis, il est parfois préconisé de retarder cet enfouissement. Cela dit, cet enfouissement post-semis - et partiel par la force des choses, des biomasses Cipan Poaceae retardera aussi - pour des raisons d'ordre pratiques, l'application de Mo. Cet enfouissement post-semis aura pour effet de faire coïncider dans le temps l'action stimulatrice du Mo sur la flore (azoto)bactérienne du sol et la montée en puissance du taux de prélèvement de l'azote et du phosphore par les racines. D'un point de vue agronomique, le Mo appliquée post-semis en ce sens pourrait donc être contreproductif du fait d'une concurrence accrue entre cette flore (azoto)bactérienne et les racines du maïs, et cela en dépit d'un certain effet *auxinogène* (phytogène) en début de culture.

### Dans les faits, il y a quatre (4) cas de figures ;

i) sols nus et donc après le semis des Cipan ; nécessite des apports de Mo pondéreux d'au moins 40 à 100 g par ha difficilement justifiable sur culture non-*Fabaceae*;
ii) résidus de culture pailleux au sol avant le semis des Cipan ; nécessite un passage dédié du pulvérisateur agricole à cet effet tout aussi difficilement justifiable ;
iii) phytomasses Cipan lors de leur destruction chimique avant le semis de la culture de rapport ; ce type de destruction chimique n'est plus préconisée ;
iv) Phytomasses Cipan lors de leur destruction chimique après le semis de la culture de rapport : stimule la flore azotobactérienne du sol au moment du démarrage des plantules, cette concurrence des *Azotobacteraceae* etant parfois contreproductive.

L'apport du Mo à la résidusphère provenant de l'enfouissement des résidus de culture pailleux au sol - pourtant en principe très capables de stimuler le développement et l'activité BFCP des populations Azotobacteraceae, s'avère problématique et/ou économiquement injustifiable en productions agronomiques des Poaceae céréalières et fourragères.

### Cultures intermédiaires pièges à nitrate (Cipan)

Les Cipan sont des cultures, généralement fourragères et avantageusement crucifères (eg. moutarde et radis fourrager) et/ou Poaceae (eg. raygras, fétuque) implantées après la récolte d'une culture d'hivers et avant le semis d'une culture le printemps suivant, i.e. au moment de *l'interculture.* La croissance aérienne et souterraine de ces cultures, en prélevant l'azote nécessaire à cet effet, permet effectivement de le « piéger » temporairement, lui évitant ainsi d'être lessivé vers la nappe phréatique et/ou les eaux souterraines. Les Cipan les plus efficaces en termes de captage des reliquats d'azote minéral à l'automne sont les Brassicacea, notamment la moutarde blanche, et les *Graminae* céréalières, notamment l'avoine et l'orge fourragères. Les Cipan Brassicacea sont généralement « gelatifs » et détruits automatiquement par les gels automnaux, notamment dans le NE de la France et de l'Europe de l'ouest. Les Cipan Poaceae, céréales et fourragères, sont elles laissées en place jusqu'à la sortie d'hiver ; elles sont alors détruites chimiquement à l'aide d'un herbicide de type glyphosate afin d'éviter des repousses au sein de la culture d'été suivante, généralement un maïs.

Pourtant, seulement une fraction des quelques 2 000 000 d'hectares de terres arables en grandes cultures en France pouvant bénéficier de l'implantation de CIPAN font l'objet d'une telle pratique culturale. Pour l'essentiel il s'agit de grandes cultures de printemps, notamment les maïs, le tournesol, la betterave et/ou la pomme de terre ayant eu comme précédents culturaux une céréale et/ou toute autre culture récoltée à la fin de l'été, voire la mi-septembre.

Or, la susdite impopularité des Cipan est attribuable à leurs faibles pouvoirs fertilisants du fait d'un rapport C/N de leurs biomasses trop élevé. En effet, il existe pour les matières organiques Cipan un certain rapport C/N critique, au alentours de 12,5, au-delà du quel la phytodisponibilité à court terme de l'azote organique est réduite drastiquement du fait d'une trop forte immobilisation de l'azote minéral par la flore bactérienne du sol (Hodge *et al.* 2000). En améliorant globalement le rapport C/N de la « résidusphère » ainsi *cipanisée* on pourrait en principe favoriser cette première phase de re-largage de l'azote ; faut-il encore que cette dynamique ne viennent concurrencer le prélèvement d'NP par les racines du maïs.

Le but d'éventuels apports de Mo au système sol/résidusphère/sol est donc d'améliorer la valeur fertilisante de Cipan non-légumineuses, avantageusement des ogres ou des avoines fourragères, en stimulant l'activité de la microflore azotobactérienne profitant de leurs enfouissements et/ou celles des résidus de cultures pailleux généralement (nécessairement) présents au sol lors de leurs implantations.

### La biofertilisation à l'aide de BFCP azotobactériennes

Les BFCP (bactéries favorisant la croissance des plantes) colonisent, outre les racines de certaines cultures, les résidus de cultures (pailleux), les engrais organominéraux et/ou les biomasses racinaires résiduelles. Les mécanismes responsables de l'amélioration de la croissance comprennent : (i) la production de sidérophores, (ii) l'antibiose contre des bactéries et des champignons pathogènes, (iii) la production de substances favorisant la croissance, et iv) la solubilisation des phosphates organiques et inorganiques. Les BFCP appartiennent à plusieurs genres, y compris *Agrobacterium, Alcaligenes, Arthrobacter, Azotobacter, Bacillus, Cellulomonas, Erwinia, Flavobacterium, Pseudomonas, (Brady)rhizobium* et *Xanthomonas.* Les *Azotobacteraceae* sont elles des bactéries libres, aérobies et capables de diazotrophie non symbiotique. Leurs populations peuvent varier dans le sol mais ne dépasse que très rarement 10² à 10³ par gramme de sol. Ces inocula, contrairement aux inocula *Rhizobiaceae,* peuvent être appliqués aux résidus de cultures pailleux au sol, aux engrais organominéraux. Le genre *Azotobacter* est composé d'au moins 6 espèces, y compris *Azotobacter chroococcum* et *Azotobacter vinelandi.* Tout comme les *Azotobacteraceae* indigènes du sol, les BFCP azotobactériennes réintroduites par inoculation peuvent elles aussi bénéficier d'apports en Mo.

### Quelques brevets pertinents ?

Un premier document **D1** (GB 2 110 518 A) décrit un pelliculage de semences - *Fabaceae* et non-Fabaceae, constitué essentiellement d'une fraction protéique complémentée de certains sels (oligo)élémentaires. Or, et bien que le Mo (molybdène) est implicitement mentionné comme pouvant être effectif en soi sur *non-Fabaceae (eg.* maïs), cette efficacité supposée n'est pas appuyée par la reste de la description et/ou - surtout, des exemples d'applications fournis. En effet, il est révélé que ce sont les oligoéléments Zn (zinc), Mg (magnésium) et Mn (manganèse) qui sont efficaces en soi, les autres oligoéléments, y compris donc le Mo, étant habituellement apportés ensembles (« and ») à titre « d'additifs ». Le rôle unique de Mo - même à titre d'agent phytogène apporté directement aux et pour les semences, n'est pas l'objet d'aucune autre mentions dans D1. Or, cette absence est en accord avec l'état de la technique selon laquelle le Mo n'est jamais apporté en soi (seul) aux cultures céréalières et/ou de maïs puisque les besoins, voire les déficiences, en Mo de celles-ci sont à toutes fins indétectables et/ou inconséquentes.

Un deuxième document **D2** (US 4 930 431 A), lui, ne décrit pas la « vectorisation » d'oligoéléments au sens entendu vers les résidus de culture pailleux au sol, mais plutôt le rapprochement mécanique de tels engrais et desdits résidus de culture à l'intérieure d'une même raie de semis (« furrow »). Selon D2, les engrais sont premièrement placés dans ladite raie de labour et les résidus de culture par la suite poussés (« scrape into ») vers / à l'intérieure de cette même raie. Il y a donc deux gestes (actions) mécaniques impliqués ici n'ayant rien à voir avec le semis de petites semences fourragères au sens entendu par la présente invention qui elle propose un geste unifié et comportant étonnamment ici une double action ; dispersion des semences et fertilisation en Mo de la résidusphère (voir *infra).* A noter aussi qu'essentiellement D2 décrit un appareil aratoire dédié au semis-direct, i.e. sans labour et enfouissement, ou même incorporation superficielle, desdits résidus de culture pailleux au sol. Or, la présente invention n'est pas elle - comme de raison, destinée à la réalisation de semis-directs.

Enfin, un autre document D3 (FR 2 941 592 A1 ) décrit lui un apport de Mo et de tryptophane (TRP) soit directement ou en proximité de la rhizosphère par traitement des semences, soit directement ou en proximité de la résidusphère par pulvérisation liquide ou à l'aide d'un engrais organominéral. Ces deux modes d'applications présupposent - avec raison, que les ions MoO4 (molybdate) - un peu comme les ions PO₄ (phosphate), soient peu mobiles dans le sol en raison de leur fixation physico-chimique ; la chimie du molybdène est en ce sens similaire à celle du phosphore. C'est pourquoi il sembla que l'ion molybdate dû être, soit pulvérisé finement sur l'ensemble des résidus de culture pailleux au sol, soit localisé en proximité des racines.

### DÉFINITIONS

**Enduire (enduits) ;** Présence à la surface d'une semence un produit quelconque, indépendamment de sa nature et/ou de sa co-formulation. Le dit produit peut par la suite être imbibé, absorber, et/ou confiné à la surface extérieure de la semence.
**Pelliculage ;** Enduit particulier du fait de sa formulation (eg. adjuvant, collant, mouillant) qui par définition restera confiné pour l'essentiel à la surface de la semence, formant du coup ainsi une « pellicule »
**Résidus de culture pailleux :** Résidus de culture au sol après la récolte de céréales à pailles, et aussi de résidus de culture de maïs-grain. Ces résidus de culture pailleux comprennent non seulement les pailles récoltables mais aussi les chaumes et les biomasses racinaires.
**Rhizosphère :** Région du sol directement formée et influencée par les racines et les micro-organismes qui leurs sont associés
**Résidusphère :** Volume ou zone du sol entourant immédiatement les résidus de culture pailleux et/ou biomasses racinaires résiduelles et plus ou moins influencé par ceux-ci. Il est aussi question d'un « noyau » où se situe la décomposition des résidus de culture.
**Vectorisation (du Mo ou d'oligoéléments en générale)** : Apport d'un (oligo)élément, et plus particulièrement ici du molybdène (Mo) d'un milieu émetteur - soit en phase solide, liquide ou gazeuse, vers un milieu - dit substrat, récepteur pouvant le valoriser.

### DIVULGATION DE L'INVENTION

### Problème technique

Les Cipan non-Fabaceae sont associées à un certain arrière effet dépressif sur les rendements agronomiques. La complémentation molybdénique (Mo) des résidusphères constituées lors de l'enfouissement des Cipan en surface de sols arables pourrait en principe atténuer cet arrière effet attribuable essentiellement à la sur-immobilisation de l'azote minérale. Or cette complémentation est elle tout autant problématiques et/ou économiquement injustifiable. D'autre part, les apports de Mo directement aux cultures céréalières et/ou Poaceae fourragères *via* la pulvérisation des semences et/ou des feuillages - voire des sols nus, sont généralement considérées comme inconséquents, les carences en Mo pour de telles cultures étant soi disant indétectables. Reste le surdosage de l'azote fertilisant afin de compenser pour la sur-immobilisation de l'azote par les résidusphères (résidus de culture pailleux, Cipan enfouies) ; cette pratique n'est plus d'actualité étant donnée les risques de pollution diffuse et d'inefficience énergétique.

### Solution technique

La solution technique proposée consiste à pelliculer ou enduire de molybdène (Mo) des semences de Cipan non-Fabaceae mises en contacte directement avec des résidus de culture pailleux au sol au moment de leur enfouissement à l'automne. Cette valorisation du Mo vers ces résidus de culture pailleux au sol à l'aide de semences (fourragères) non-Fabaceae est nouvelle du fait que lesdites semences ne sont pas a *priori* expressément traitées avec du Mo en raison de la soi disant inconséquence de tels apports de Mo aux Cipan et grandes cultures non-Fabaceae. En effet, cette vectorisation cible surtout les flores azotobactériennes des résidusphères nouvellement constituées à partir desdits résidus de culture pailleux un fois enfouis.

Plus concrètement, il s'agit d'un procédé selon la revendication 1 pour la vectorisation d'oligoéléments vers les résidus de culture pailleux au sol et/ou les résidusphères *in situ* qu'ils présupposent une fois enfouis en surface de sols arables constitué de semences non-Fabaceae et de sels solubles desdits oligoéléments. Cet enfouissement peut ce faire par travail cultural simplifié (TCS) plutôt que par labour plus profond, voir par simple disqueage et/ou à l'aide d'une herse rotative assurant une incorporation des semences et des résidus de culture en surface sur quelques cm de profondeur. Ce procédé pour la vectorisation d'oligoéléments est caractérisé en ce que les sels d'oligoéléments ainsi vectorisés sont choisis parmi un groupe comprenant les sels de zinc (Zn), le cuivre (Cu), le manganèse (Mn), le fer (Fe), le bore (B) et/ou le molybdène (Mo).; la vectorisation du Mo est particulièrement revendiquée ici.

Les semences non-Fabaceae sont pelliculées ou enduites desdits sels d'oligoéléments avant leurs mises en contact avec les résidus de culture pailleux au sol. Cette vectorisation d'oligoéléments vers lesdits résidus de culture pailleux au sol se substitute donc à une pulvérisation de ces résidus avec des solutions liquides de ces sels. Le pelliculage des semences peut lui ce faire selon l'état de l'art, soit à l'aide d'enduis, soit par saupoudrage. Cette dose de Mo - avantageusement amenée sous la forme de sels cationiques et/ou d'ammonium communément utilisée de la sorte en agriculture, peut-être minorée si un apport conjoint de tryptophane - avantageusement à hauteur de 10 g par hectare et/ou une suraccumulation préalable du Mo par des BFCP azotobactériennes sont utilisés. L'équivalent d'une dose - hectare de Mo est comprise entre 1 et 100 g, plus particulièrement entre 10 et 40 g, et avantageusement d'environ 25 g est ainsi apportée aux résidus de culture pailleux au sol.

Les semences sont ainsi mises en en contact avec les résidus de culture pailleux au sol sur environs 5 cm de profondeur en surface d'un sol arable, voire plus avantageusement sur au plus environs 2 cm de profondeur. La présence de l'essentiel des résidus pailleux au sol toujours non enfouis au moment du semis et inhabituelle et contraire à l'état de l'art qui préconise la préparation d'un lit de semence le plus uniforme possible afin de favoriser le contacte sol / semence. Cela dit, il est donc utile ici d'adopter une pratique culturale dite simplifiée (TCS) permettant d'incorporer simultanément à la surface du sol résidus de culture pailleux et semences.

La surface du sol initialement recouverte de résidus de culture pailleux et recevant par mise en contacte avec ces résidus de culture au moins une semence individuelle est la plus petite possible, soit comprise entre 1 et 10 cm², plus particulièrement entre 2 et 8 cm², et avantageusement d'environ 4 à 5 cm². Théoriquement, les dimensions de ces surfaces de sols arables initialement recouvertes de résidus pailleux sont fonction de la taille des semences; pour une dose pondérale donnée, un plus grand nombre de petites semences occupera d'autant plus de petites surfaces arables facilitant ainsi la dispersion du Mo et sa mise en contacte avec les résidusphères. En pratique, il faudra assurer une répartition des semences la plus homogène possible.).

Il s'agit donc aussi de semences fourragères non-Fabaceae enduites ou pelliculées de Mo pour la vectorisation du Mo vers les résidus de culture pailleux au sol et/ou les résidusphères *in situ* qu'ils présupposent un fois enfouis en surface de sols arables. Leurs poids de mille grains (PMG) est compris entre 500 et 3 000 mg, et avantageusement d'au plus 1 000 mg. Ces PMG présupposent des doses-hectare pondéralement équivalentes à entre 15 et 40 kg, et avantageusement de l'ordre de 25 kg. Il s'agit d'apporter entre 8 et 25 millions semences individuelles (propagules) par hectare, soit en moyenne une semence par unité de surface d'environ 8 à 10 cm² pour les PMG plus importants *(i.e.* de 2 à 3 g ; eg. *Lolium multiflormum* et L. *perenne),* et d'au plus quelques - 2 à 4, cm² pour les PMG les plus faibles *(i.e.* d'au plus 1 g ; *eg. Festuca, Dactylis,* voire *Agrostis).*

### Avantages apportés et activité inventive

L'avantage le plus évident qu'apporte l'invention est de permettre *de facto* la vectorisation du Mo vers les résidus de culture au sol sans avoir recours à un passage pulvérisateur dédié. L'aspect pratique et économique de cette approche est non négligeable. En effet, et tel que mentionné ci-haut, la simple dispersion de semences sur des résidus de culture au sol est bien plus simple à mettre en oeuvre que le procédé mécanique proposé dans D2 (US 4 930 431 A) ; la présente invention est donc plus avantageuse pour l'utilisateur. En effet, le molybdate est ici capable de doper la diazotrophie des résidusphères même s'il n'est pas pulvérisé directement sur celles-ci, mais bien plus simplement apporté - « vectorisé » en sorte, via des semences pelliculées de Mo.

La fertilisation - par pelliculage de semences et/ou autrement, de cultures Poaceae, y comprises de *Lolium, Triticum, Zea,* et *Hordeum,* ayant donc été à ce jour jugée - avec raison, par l'homme de métier comme incongrue et inutile, l'obtention d'un quelconque résultat agronomique ou phytogène est donc inattendu.

Enfin, l'enfouissement à une certaine profondeur des semences non-Fabaceae fourragères lors de l'incorporation des résidus de culture permettra de sélectionner pour les semences les plus vigoureuses. Cette vigueur relative des plantules ainsi établies permet une production optimale de phytomasses en dépit d'un lit de semences accidenté contraire aux habitudes de l'homme de métier. La sélection de plantules vigoureuses via l'émergence des semences profondément enfouies est un phénomène connu (Dornbush et Wilsey 2010) bien que peu évoqué en agronomie.

### BRÈVE DESCRIPTION DES DESSINS ET FIGURES

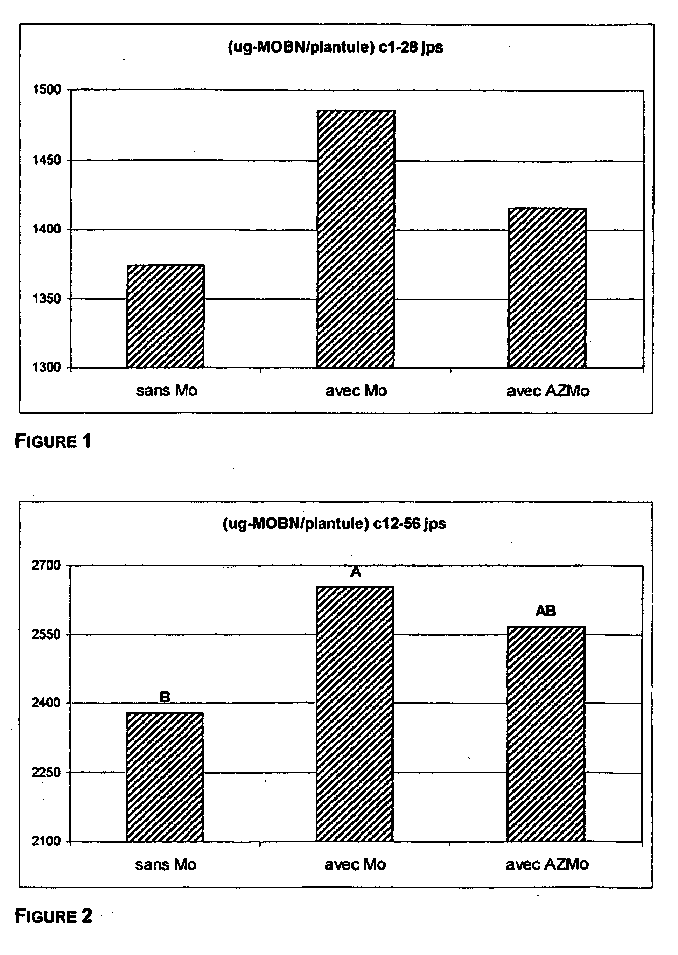

- **Figure 1** :: Mobilisation de l'azote par plantule (ug-MOBN / plantule) de raygras *(Lolium multiflorum)* selon le type de vectorisation du Mo (i.e. avec ou sans Mo, ou selon la présente invention - AZMo) vers les résidusphères constituées de résidus de culture pailleux enfouis sur 2 cm à la surface d'un sol arable en pot et en serre 28 jours post semis au moment de la première coupe (c1). Ces résultats sont issus d'un premier essai avec six (6) répétitions disposées en blocs (RCBD).
- **Figure 2** :: Mobilisation de l'azote par plantule (ug-MOBN / plantule) de raygras *(Lolium multiflorum)* selon le type de vectorisation du Mo (i.e. avec ou sans Mo, ou selon la présente invention - AZMo) vers les résidusphères constituées de résidus de culture pailleux enfouis sur 2 cm à la surface d'un sol arable en pot et en serre 56 jours post semis après la deuxième coupe (c12). Ces résultats sont issus d'un premier essai avec six (6) répétitions disposées en blocs (RCBD). Les moyennes associées au même lettrage sont similaires.

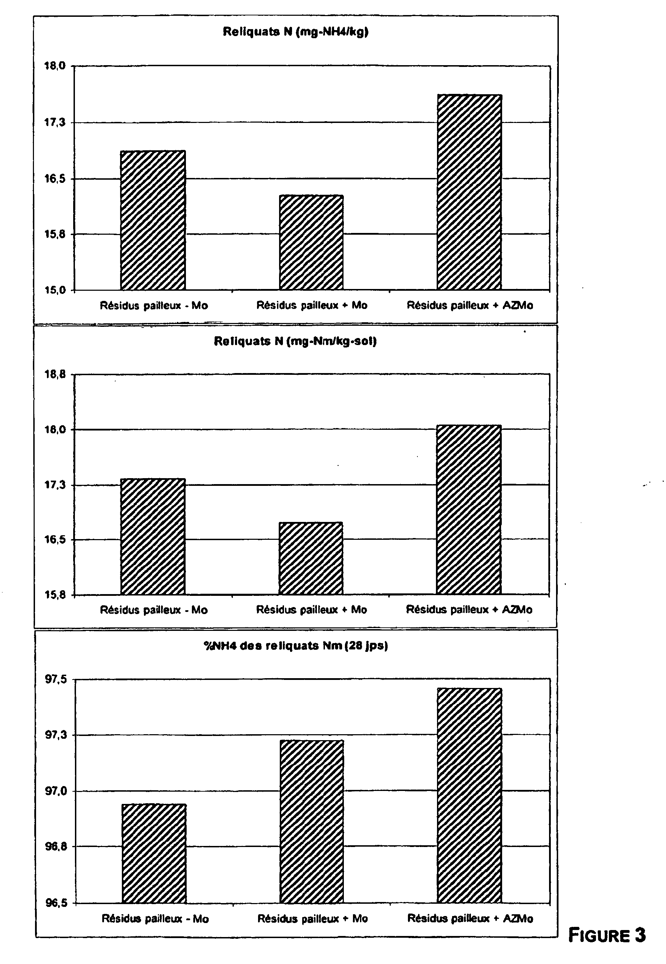

- **Figure 3** :: Reliquats d'azote minéral 28 post semis lors du premier essai avec six (6) répétitions disposées en blocs « Fisher ». A noter que l'apparente (mais non-significative à une p.c.(α) de 5%) suraccumulation d'azote minéral (Nm) dans les sols semble être surtout attribuable à l'accumulation de l'ammonium (NH₄⁺) au dépends des nitrate, d'où une certaine augmentation du %NH₄⁺ dans ces reliquats.

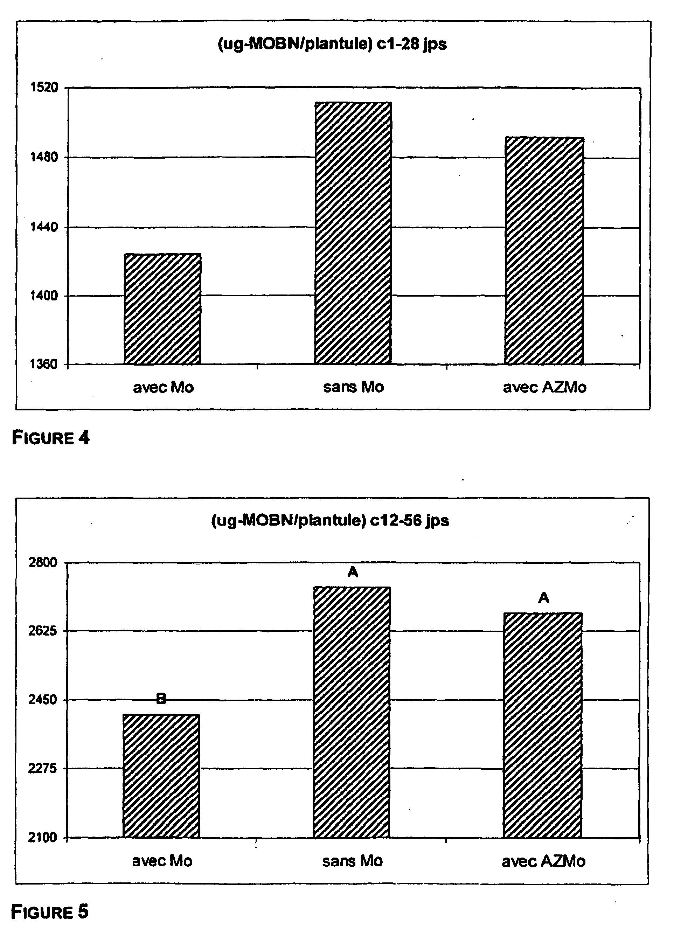

- **Figure 4 :**: Mobilisation de l'azote par plantule (ug-MOBN / plantule) de raygras (*Lolium multiflorum*) selon le type de vectorisation du Mo (i.e. avec ou sans Mo, ou selon la présente invention - AZMo) vers les résidusphères constituées de résidus de culture pailleux enfouis sur 2 cm à la surface d'un sol arable en pol et en serre 28 jours post semis au moment de la premlère coupe (c1). Ces résultats sont issus d'un deuxième essai avec quatre (4) répétitions disposées en carré latin.
- **Figure 5 :**: Mobllisation de l'azote par plantule (ug-MOBN /plantule) de raygras (*Lolium multiflorum*) selon le type de vectorisation du Mo (i.e. avec ou sans Mo, ou selon la présente invention - AZMo) vers les résidusphères constituées de résidus de culture pailleux enfouis sur 2 cm à la surface d'un sol arable en pot et en serre 56 jours post semis après la deuxième coupe (c12). Ces résultats sont issus d'un premier essai avec quatre (4) répétitions disposées en carré latin. Les moyennes associées au même lettrage sont similaires.

### MODE DE RÉALISATION PRÉFÉRÉ DE L'INVENTION

L'enfouissement des résidus de culture pailleux ainsi mise en contact avec lesdites semences fourragères - avantageusement non-*Fabaceae*, peut ce faire par simple travail cultural simplifié (TCS) plutôt que par labour plus profond, voir par simple disqueage et/ou à l'aide d'une herse rotative assurant une certaine incorporation des semences et des résidus de culture pailleux en surface du sol sur quelques cm de profondeur. Cela permet d'incorporer simultanément à la surface du sol résidus de culture pailleux et semences. La présence de l'essentiel des résidus pailleux au sol toujours non enfouis au moment du semls et inhabituelle et contraire à l'état de l'art qui préconise la préparation d'un lit de semence le plus uniforme possible afin de favoriser le contacte sol / semence. Ce recours aux TCS est possible du fait que - malgré certaines exigences en termes de préparation de lits de semences et/ou de profondeurs de semis, les semences *Poaceae* et *Brassicaceae* semées plus en profondeur (i.e. au-delà de 20 mm) peuvent néanmoins donner des couverts végétaux tout aussi massifs que des semences du même type semées plus judicieusement. C'est cette plasticité des dites semences - voir en ce sens Lamb et Johnson 2004 "et Aberle et al. 2003, lors de l'implantation des plantules productifs que permet de rendre opérable la présente invention.

La dose de Mo - avantageusement amenée sous la forme de sels cationiques et/ou d'ammonium communément utilisée de la sorte en agriculture, peut elle être minorée si un apport conjoint de tryptophane - avantageusement à hauteur d'une dizaine de g par hectare, et/ou une suraccumulation préalable du Mo par des BFCP azotabactériennes sont effectués. Le pelliculage des semences peut lui ce faire selon l'état de l'art, soit à l'aide d'enduis, soit par saupoudrage.

Théoriquement, les dimensions des surfaces de sols arables recouvertes de résidus pailleux sont fonction de la taille des semences : pour une dose pondérale donnée, un plus grand nombre de petites semences occupera d'autant plus de petites surfaces arables facilitant ainsi la dispersion du Mo et sa mise en contacte avec les résidusphères. Cela dit, en pratique, il faudra assurer une répartition des semences la plus homogène possible.

Enfin, ces PMG présupposent des doses - hectare pondéralement équivalentes à entre 15 et 40 kg, et avantageusement de l'ordre de 25 kg. Il s'agit donc d'apporter entre 8 et 25 millions semences individuelles (propagules) par hectare, soit en moyenne une semence par unité de surface de plus de 8 à 10 cm² pour les PMG plus importants *(i.e.* de 2 à 3 g ; *eg. Lolium multiflorum e L. perenne),* et d'au plus quelques - 2 ou 4, cm² pour les PMG les plus faibles (i.e. d'au plus 1 g ; *eg. Festuca, Dactylis,* voire *Agrostis).*

### APPLICATIONS BIOINDUSTRIELLES ET AGRONOMIQUES

Afin d'illustrer comment l'invention est susceptible d'être appliquée à l'agriculture j'ai mené - en serre et en pots, deux essais. Pour ce faire, j'ai utilisé un sol alsacien de la région de Thann (68 ; Tableau 1), préalablement séché passivement à l'aire et tamisé à 5 mm.

**Tableau 1 : Caractérisation physico-chimique du sol alsacien**

| Paramètre | Unité | gewn |
|---|---|---|
| Argile | % | 27,0 |
| LF/LG | Na | 1,72 |
| Sables fins | % | 18,1 |
| pH (eau) | Na | 5.7 |
| Matière organique | g/kg-sol | 55,5 |
| CEC | mÉq/kg-sol | 101 |
| Saturation CEC | % | 56 |
| P₂O₅ assimilable | mg/kg-sol | 37 |
| K₂O échangeable | mg/kg-sol | 80 |
| MgO échangeable | mg/kg-sol | 200 |
| CaO échangeable | mglkg-sol | 1850 |
| Zₙ-DTPA | ug/kg-sol | 700 |

Avec ces deux essai d'application, j'ai cherché à démontrer que la vectorisation du Mo vers les résidusphères par pulvérisation liquide des résidus de culture pailleux au sol peut toute aussi bien être effectuée par la mise en contact de ces résidus de culture pailleux avec certains types de semences fourragères non-Fabaceae. Cette vectorisation du Mo - sans pour autant exclure celles d'autres oligoéléments, est nouvelle et à l'encontre des habitudes et préjugés de l'homme du métier pour qui un tel traitement molybdénique des semences non-Fabaceae - Poaceae notamment, est incongrue et inutile.

### Essai d'application AZMo

J'ai appliqué l'équivalent de 25 g-Mo à 25 kg de semences de fétuque ovine *(Festuca ovina,* variété « Clio »), soit l'équivalent de 1 mg-Mo par g de semences. Pour ce faire, il fallut mélanger à 100 g de ces semences (PMG = 0,75 g) 25 mL d'une solution comprenant de 2,5 mL de FixaMo® *(i.e.* 40 g-Mo par L ; Agronutrition, Carbonne, Fr), soit suffisamment pour les enduire par mouillage. Cette solution fut en quelques heures suffisamment absorbée par les semences pour permettre un comptage précis de celles-ci. En ce sens, environs 25 de ces semences peuvent être mélangées très délicatement à 5 g de résidus de culture pailleux - secs, hachés et tamisés à 4 mm, enduits de 5 ml d'eau. Ce mélange résidus de culture / semences fut par la suite incorporé à 200 g de sol, le tout étant placé au dessus de 550 g du même sol dans un pot de 1 L, dont la superficie de l'ouverture supérieure est d'environ 100 cm². Une certaine quantité de sable inerte chapeaute le tout afin d'éviter la propagation d'algue et la dispersion des semences. A titre de blanc, des semences non - traitées sont utilisées. À titre de référence témoin, j'ai utilisé de telles semences non - traitées mais avec des résidus de culture enduits avec 5 mL d'une solution contenant 4 mg-Mo par L, soit l'équivalent de25 g-Mo mais pour 5 à 7 tonnes (10⁶ g) de tels résidus pailleux et par hectare sur 10 cm de profondeur en surface d'un sol arable.

Il y a donc trois modalités ;
1. un blanc sans molybdénisation des semences et des résidus de culture
2. un témoin sans molybdénisaton des semences, l'équivalent de 25 g-Mo par hectare étant apporté aux quelques 10 tonnes de résidus de culture pailleux.
3. un traitement avec molybdénisation des semences via l'apport de l'équivalent de 25 g-Mo à 25 kg de semences - ici *Festuca,* mais ici sans la susdite molybdénisation des résidus de culture pailleux.

A noter qu'il n'y a pas de modalité avec *molybdénisation* des semences ET des résidus de culture.

Cette reconstitution en pot doit simuler un travail simplifié du sol capable de placer les semences qu'à quelques centimètres (cm) de profondeur - avantageusement au plus 2 cm. En effet, ici les 200 g de sol comprenant les semences et résidus de culture occupent une couche d'approximativement 2 cm d'épaisseur ; la couche inférieure comprenant les 550 g de sol est elle d'environ 5,5 cm. J'ai répété ces trois modalités six (6) fois dans le cadre d'un simple dispositif en blocs Fischer, les trois modalités étant disposées aléatoirement à l'intérieure de chaque bloc.

Afin de démontrer clairement que le Mo pelliculé sur les semences de *Festuca ovina* est effectivement « vectorisé » vers les résidus de culture pailleux enfouis (résidusphères), ces semences (propagules végétales) ont été préalablement tuées par étuvage à 65 degrés C pendant au moins 90 minutes ; elles ne pourront ainsi germer et donner une plantule ; elles sont inertes en ce sens. Au lieu, une cinquantaine de semences de *Lolium multiflorum* (raygras) ont été placées à la surface de chaque pot, tassées légèrement et recouvertes de sable inerte. L'effet phytogène de la modalité AZMo ne pourra ainsi qu'être attribuable à une vectorisation du Mo vers les résidus pailleux, le dit Mo n'ayant effectivement jamais été directement en contacte aves les semences de raygras. A noter qu'ici celles-ci sont semées 28 jours après le pseudo-semis des semences fétuque inertes mais porteuses de Mo. De la sorte, j'ai pu effectuer une première coupe (c1) 28 jours post semis (jps) du raygras - soit 56 jps de la fétuque, et une deuxième coupe (c12) 56 jps - soit 84 jps de la fétuque. Après cette deuxième coupe, j'ai aussi dosé la teneur des sols en nitrate et ammonium à titre de « reliquats » d'azote ; en principe, je m'attendais à une certaine suraccumulation de cette azote minéral (Nm = nitrates + ammonium) en raison d'une plus grande activité des flores azotobactériennes du sol / résidusphères.

Afin d'éviter des carences nutritionnelles sans nuire à l'activité azotobactérienne devant profiter de cette vectorisation du Mo, un minimum d'azote minéral (nitrate d'ammonium) est apporté dès le semis (i.e. 12 mg-N par kg de sol) via une solution nutritive et oligoélémentaire dépourvue de Mo.

Une fois la première coupe effectuée à environ 56 jps de la fétuque, un deuxième apport d'azote minéral plus conséquent doit aussi être apporté (i.e. 35 mg-N par kg de sol) afin d'assurer une repousse vigoureuse du raygras récoltable 54 jps de la fétuque (c2) ; l'activité azotobactérienne de la résidusphère s'étant habituellement résorbée à ce stade - du moins lors d'essais en serres, cet relative abondance d'N ne sera pas contreproductive en termes de diazotrophie azotobactérienne.

Une fois les phytomasses récoltées - les valeurs des première (c1) et deuxième coupes étant additionnées (c12), elles ont été séchées par étuvage à 60 degrés C et analysées pour leurs teneurs en N ; la mobilisation de l'azote (MOBN) par ces matières sèches des parties aériennes (MSPA) pourra ainsi être calculée (MSPA x %N). Ces valeurs de MSPA et de MOBN issues des six répétitions firent l'objet d'analyses de variance (Anova) permettant - le cas échéant, la comparaison multiple (cf. Duncan) des moyennes MSPA et MOBN des trois modalités. Il est aussi utile de compter le nombre de plantules émergés par pot ; le calcul des MSPA et MOBN par plantules - en mg et ng respectivement, étant souvent plus précis. Alternativement, le nombre de plantules émergées par pot peut aussi servir de co-variable quantitative lors d'une analyse de covariance (Ancova). A noter que l'Anova et l'Ancova doivent mener aux mêmes conclusions.

Les MOBN 28 et 56 jps du raygras sont rapportés aux Figures 1 et 2, respectivement. L'effet phytogène aperçu à 28 jps (c1; Figure 1) ce confirme et devient statistiquement défendable à 56 jps (c12 ; Figure 2) ; ce décalage dans le temps est attribuable au temps nécessaire pour que s'effectue le re-largage et l'ammonification de l'azote d'origine diazotrophique. En ce sens, à 56 jps AZMo est tout aussi performant que la pulvérisation directe des résidusphères avec Mo ; ladite « vectorisation » semencière du Mo est donc vraisemblablement capable de remplacer une pulvérisation liquide des résidus pailleux avec du Mo.

A noter aussi le dosage des reliquats d'Nm 84 jps de la fétuque (Figure 3). L'apparente suraccumulation d'Nm en présence de Mo semble ici être surtout le fait d'une accumulation d'ammonium (NH4) ; la proportion de celui-ci (%NH4) dans les reliquats étant particulièrement élevée pour AZMo. Cette prédominance de l'ammonium est en accord avec ne plus grande activité (azoto)bactérienne. En effet, l'azote du sol d'origine diazotrophique re-largué par les bactéries devant être avant tout ammonifié ; l'accumulation transitoire de l'ammonium devient donc de facto un indice de l'importance relative de l'activité diazotrophique (azoto)bactérienne du sol.

A noter ici que la molybdénisation des semences plutôt que la pulvérisation directe des résidus de culture pailleux sera en principe toute aussi efficace, non seulement en terme phytogène (MOBN), mais aussi au niveau de la résidusphère en terme d'accumulation de l'azote. En situations agronomiques, cette accumulation sera ainsi susceptible d'être mobilisée par la culture dès la sortie d'hiver. Une simple culture intermédiaire piège à nitrate (Cipan) constituée de Festucaceae et/ou *Lolium multiflorum* pourra ainsi non seulement piéger mais aussi contribuer positivement au bilan azote de la culture de rapport suivante, un maïs par exemple.

### Essai d'application AZMo-bis

Afin de confirmer cette équivalence avantageuse entre la molybdénisation des résidus pailleux par pulvérisation liquide et par mise en contacte avec des semences non-Fabaceae molybdénisées, j'ai repris une deuxième fois l'essentiel de l'essai AZMo. J'ai par contre cette fois-ci implanté à la surface des sols reconstitués en pots une moyenne de 50 plants de *Lolium multiflorum* par pot sans décaler de 28 jours leurs semis par rapport à celui des semences de fétuque inertes. En sus des *Festuca ovina* (fétuque ovine), ces plantules de raygras produisent d'autant plus de MSPA et permettent d'augmenter la précision de l'essai.

En ce sens, je n'ai effectué que quatre (4) répétitions des susdites trois (3) modalités. A termes, tout autant de MOBN devaient apparaître sur les deux modalités avec molybdénisation soit des résidus de culture par pulvérisation liquide, soit - au sens de la présente invention, par vectorisation pas mise en contacte des semences traitées au Mo et desdits résidus de cultures pailleux. Puisque dans ce cas-ci, les MSPA auront été produites par le *Lolium multiflorum,* cet effet phytogène du traitement des semences *Festucaceae* sur *Lolium* est nécessairement attribuable à une action indirecte de ces semences traitées *via* la résidusphère. Les données aux Figure 4 (c1 à 28 jps) et Figure 5 (c12 à 56 jps) confirment encore une fois que la simple dispersion de semences molybdénisées et ainsi mises en contacte avec les résidus de culture pailleux au sol peut remplacer une pulvérisation liquide de ces derniers ; la simpliciét de cette pratique et la double action des semences - entant que propagules végétales ET vecteurs pour engrais oligoélémentaires à base de Mo, ne peut qu'être avntageuse pour l'utilisateur.

Pour terminer, il faut comme de raison noter qu'ici l'utilisation de semences de fétuques inertes ne servit qu'à illustrer que c'est la vectorisation du Mo vers les résidus de culture qui est responsable de l'effet phytogène sur le raygras semé par après. Dans des situations plus agronomiques, in *situ,* il n'est plus nécessaire de recourir à ce type de semis en deux temps (fétuque inerte / raygras récoltable), le simple semis - au sens de la présente invention, de semences viables molybdénisées d'Agrostis, *Dactylis, Festuca, Bromus* et/ou *Lolium* étant préconisé.

### Références, bibliographie et brevets pertinents

Allen, R.M., J.T. Roll, P. Rangaraj, V.K. Shah, G.P. Roberts et P.W. Ludden. 1999. Incorporation of molybdenum into the iron-molybdenum cofactor of ntirogenase. J. Biol. Chem. 274: 15869-15874.
Claude, P-P. et L. Fillion. 2004. Effet de l'apport d'un inoculum bactérien aux résidus de culture de maïs-grain au sol sur le rendement et la qualité de blés d'hiver panifiables en France. Agrosol (depuis « Agrosolutions ») 15(1) :23-29.
Dornbush, Mathew E. et Brian J. Wilsey. 2010. Experimental manipulation of soil depth alters species richness and co-occurrence in restored tallgrass prairie. J. Ecol. 98, 117-125
El-Samad, Abd H.M., H.M. El-Komy, M.A.K. Shaddad et A.M. Hetta. 2005. Effect of molybdenum on nitrogenase and nitrate reductase activity of wheat inoculated with Azospirillum brasilense grown under drought stress. Gen. Appl. Plant Physiol. 31:43-54.
Halsall, D.M.. 1993. Inoculation of wheat straw to enhance lignocellulose breakdown and associated nitrogenase activity. Soil Biology and Biochemistry, 25, Issue 4, Pages 419-429
Hodge, A. 2004. The plastic plant: root responses to heterogeneous supplies of nutrients. New Phytologist 162:9-24.
Hodge, A., D. Robinson et A. Fitter. 2000. Are microorganisms more effective than plants at competing for nitrogen? Trends in Plant Sci. 5(7) : 304-318.
Igarashi, R.Y. et L.C. Seefeldt. 2003. Nitrogen fixation : the mechanism of the Mo-dependent nitrogenase. Critical Reviews in Biochemistry and Molecular Biology. 38:351-384.
Kaiser, B.N., K.L. Gridley, J. Ngaire-Brady, T. Phillips et S.D. Tyerman. 2005. The role of molybdenum in agricultural plant production. Ann. Bot. 96:754-754.
Loveless, T.M., J. Royden Saah et P.E. Bishop. 1999. Isolation of nitrogen fixing bacteria containing molybdenum-independent nitrogenases form natural environments. Appl. Environ. Microbiol. 65:4223-4226.
Loué, André. 1993. Oligoéléments en agriculture. Éditions SCPA Nathan 1993.
Mendel, R.R. 2007. Biology of the molybdenum cofactor. J. Exp. Bot. 58:2289-2296.
Mendel, R.R. et R. Hänsch. 2002. Molybdoenzymes and molybdenum cofactor in plants. J. Exp. Bot. 53:1689-1698.

## Revendications

1. Procédé pour la vectorisation d'oligoéléments vers les résidus de culture pailleux *aux sols,* en utilisant des semences fourragères de Cipan non -*Fabaceae* pelliculées ou enduites de préparations contenant des sels solubles de molybdène et, accessoirement, d'autres oligoéléments choisis parmi un groupe comprenant les sels de zinc (Zn), de cuivre (Cu), du manganèse (Mn), de fer (Fe) et/ou de bore (B), lesdites semences étant mises en contacte directement avec lesdits résidus de culture pailleux au moment de leurs enfouissement à l'automne, **caractérisé en ce que** la dose-hectare équivalente de Mo apportée auxdits résidus de culture pailleux est comprise entre 1 et 100 g, plus particulièrement entre 10 et 40 g, et avantageusement d'environ 25 g.

2. Procédé pour la vectorisation d'oligoéléments selon la revendication précédente **caractérisé en ce que** les résidus de culture pailleux au sol sont enfouis sur environs 5 cm de profondeur en surface d'un sol arable, voire plus avantageusement sur environs au plus 2 cm de profondeur.

3. Procédé pour la vectorisation d'oligoéléments selon une quelconque des revendications précédentes **caractérisé en ce que** la surface du sol initialement recouverte de résidus de culture pailleux et recevant par mise en contact avec ces résidus de culture au moins une semence individuelle est comprise entre 1 et 10 cm². plus particulièrement entre 2 et 8 cm², et avantageusement d'environ 4 à 5 cm².

4. Procédé pour la vectorisation d'oligoéléments selon une quelconque des revendications précédentes **caractérisé en ce que** les semences Cipan non-*Fabaceae* ont un poids de mille grains (PMG) compris entre 500 et 3 000 mg, et avantageusement d'au plus 1 000 mg.

5. Procédé pour la vectorisation d'oligoéléments selon une quelconque des revendications précédentes **caractérisé en ce que** les semences Cipan non-*Fabaceae* sont apportées à des doses-hectare pondéralement équivalentes à entre 15 et 40 kg, et avantageusement de l'ordre de 25 kg.

6. Procédé pour la vectorisation d'oligoéléments selon une quelconque des revendications précédentes **caractérisé en ce que** les semences Cipan non-*Fabaceae* sont apportées à des doses-hectare permettent d'apporter entre 8 et 25 millions semences individuelles (propagules) par hectare, soit en moyenne une semence par unité de surface d'environ 8 à 10 cm² pour les PMG plus importants (*i.e*. de 2 à 3 g ; *eg. Lolium multiflormum* et *L perenne),* et d'au plus quelques - 2 à 4, cm² pour les PMG les plus faibles (*i.e* d'au plus 1 g ; *eg. Festuca, Dactylis,* voire *Agrastis*).

## Patentansprüche

1. Verfahren zur Vektorisierung von Spurenelementen in die strohartigen Ernterückstände auf den Böden unter Verwendung von Futterpflanzensamen von umhüllten oder beschichteten Cipan-Nicht-Leguminosen von Zubereitungen, die lösliche Salze von Molybdän und zusätzlich von anderen Spurenenelementen enthalten, ausgewählt aus einer Gruppe, bestehend aus den Zink (Zn)-, Kupfer (Cu)-, Mangan (Mn)-, Eisen (Fe)- und/oder Bor (B)-Salzen, wobei die Samen direkt mit den strohartigen Ernterückständen im Augenblick ihres Unterpflügens im Herbst in Kontakt gebracht werden, **dadurch gekennzeichnet, dass** die Dosis pro Hektar, die Mo entspricht, die den strohartigen Ernterückständen zugeführt wird, zwischen 1 und 100 g liegt, insbesondere zwischen 10 und 40 g und vorteilhafterweise bei ungefähr 25 g.

2. Verfahren zur Vektorisierung von Spurenelementen nach dem vorhergehenden Anspruch, **dadurch gekennzeichnet, dass** die strohartigen Ernterückstände auf dem Boden in ungefähr 5 cm Tiefe von der Oberfläche eines Ackerbodens untergepflügt sind, ja sogar vorteilhafterweise in ungefähr höchstens 2 cm Tiefe.

3. Verfahren zur Vektorisierung von Spurenelementen nach einem der vorhergehenden Ansprüche, **dadurch gekennzeichnet, dass** die Oberfläche des Bodens, die anfänglich mit strohartigen Ernterückständen bedeckt ist und durch das In-Kontakt-Bringen mit diesen Ernterückständen mindestens einen einzelnen Samen erhält, zwischen 1 und 10 cm² liegt, insbesondere zwischen 2 und 8 cm² und vorteilhafterweise bei ungefähr 4 bis 5 cm².

4. Verfahren zur Vektorisierung von Spurenelementen nach einem der vorhergehenden Ansprüche, **dadurch gekennzeichnet, dass** die Samen von Cipan-Nicht-Leguminosen ein Tausendkorngewicht (PMG) aufweisen, das zwischen 500 und 3000 mg liegt und vorteilhafterweise nicht mehr als 1000 mg.

5. Verfahren zur Vektorisierung von Spurenelementen nach einem der vorhergehenden Ansprüche, **dadurch gekennzeichnet, dass** die Samen von Cipan-Nicht-Leguminosen in Dosen pro Hektar zugeführt werden, die gewichtet zwischen 15 und 40 kg entsprechen und vorteilhafterweise im Bereich von 25 kg liegen.

6. Verfahren zur Vektorisierung von Spurenelementen nach einem der vorhergehenden Ansprüche, **dadurch gekennzeichnet, dass** die Samen von Cipan-Nicht-Leguminosen in Dosen pro Hektar zugeführt werden, die ermöglichen, zwischen 8 und 25 Millionen einzelne Samen (Propagationsformen) pro Hektar zuzuführen, d.h. im Durchschnitt einen Samen pro Flächeneinheit von ungefähr 8 bis 10 cm² für die wichtigsten Tausendkorngewichte (d.h. von 2 bis 3 g; z.B. *Lolium multiflorum* und *L*. *perenne*), und höchstens einige - 2 bis 4 cm² für die kleinsten Tausendkorngewichte (d.h. nicht mehr als 1 g ; z.B. *Festuca, Dactylis,* ja sogar *Agrostis).*

## Claims

1. Method for vectorising trace elements to straw crop residues on the soil, using forage seeds of non*-Fabaceae* Cipan [nitrogen-fixing intermediate crops] film-coated or coated with preparations comprising soluble molybdenum salts and, additionally, other trace elements selected from a group comprising the salts of zinc (Zn), copper (Cu), manganese (Mn), iron (Fe) and/or boron (B), said seeds coming into contact directly with said straw crop residues at the time of their burying in the autumn, **characterised in that** the equivalent dose per hectare of Mo supplied to said straw crop residues is from 1 to 100 g, more particularly from 10 to 40 g, and advantageously approximately 25 g.

2. Method for vectorising trace elements according to the preceding claim, **characterised in that** the straw crop residues on the soil are buried at a depth of approximately 5 cm on the surface of an arable soil, or more advantageously at a depth of approximately not more than 2 cm.

3. Method for vectorising trace elements according to any one of the preceding claims, **characterised in that** the surface area of the soil that is initially covered with straw crop residues and that receives, by coming into contact with the crop residues, at least one individual seed is from 1 to 10 cm², more particularly from 2 to 8 cm², and advantageously approximately from 4 to 5 cm².

4. Method for vectorising trace elements according to any one of the preceding claims, **characterised in that** the non*-Fabaceae* Cipan seeds have a thousand corn weight (TCW) of from 500 to 3000 mg, and advantageously of not more than 1000 mg.

5. Method for vectorising trace elements according to any one of the preceding claims, **characterised in that** the non*-Fabaceae* Cipan seeds are supplied at by-weight equivalent doses per hectare of from 15 to 40 kg, and advantageously of approximately 25 kg.

6. Method for vectorising trace elements according to any one of the preceding claims, **characterised in that** the non*-Fabaceae* Cipan seeds are supplied at doses per hectare which allow from 8 to 25 million individual seeds (propagules) to be supplied per hectare, that is to say on average one seed per unit of surface area of approximately from 8 to 10 cm² for the highest TCWs (i.e. from 2 to 3 g; e.g. *Lolium multiflorum* and *L. perenne*) and not more than a few - from 2 to 4, cm² for the lowest TCWs (i.e. not more than 1 g; e.g. *Festuca, Dactylis,* and even *Agrostis*)*.*
